# EUROPEAN PATENT APPLICATION

(11) **EP 4 407 396 A1**
(43) Date of publication of application: **31.07.2024**
(21) Application number: 23154063.4
(22) Date of filing: 30.01.2023
(51) Int. Cl.: G05B 23/02

(54) **STATE AWARE EVENT PROCESSING FOR AN ALARM PROVIDING SYSTEM**

(71) Applicant: ABB SCHWEIZ AG, 5400 Baden (CH)
(72) Inventor: SCHMIDT, Benedikt, 69117 Heidelberg (DE); GAERTLER, Marco, 69221 Dossenheim (DE); COPPIK, Nicolas, 64293 Darmstadt (DE); MACZEY, Sylvia, 69493 Hirschberg (DE)
(74) Representative: Maiwald GmbH

(57) **Abstract**

A method for providing an alarm by an alarm providing system, comprising: receiving plant data from at least one industrial plant by a state providing system; providing state data indicating at least one state of the at least one industrial plant by the state providing system; selecting at least one state in the provided state data based on the received plant data by the state providing system; providing an alarm by the event monitoring system, wherein the providing of an alarm, comprises: receiving the selected states in the provided state data and the plant data; detecting an alarm event in the received plant data; providing at least one rule; providing at least one alarm rule based on the selected states in the provided state data and the provided rules; and providing the alarm based on the detected alarm event and the provided at least one alarm rule.

## Description

### TECHNICAL FIELD

The present disclosure relates to a method for providing an alarm by an alarm providing system and to an alarm providing system.

### TECHNICAL BACKGROUND

The general background of this disclosure is the providing of an alarm providing system, in particular a Security Information and Event Management, SIEM, system.

Alarm providing respectively event monitoring, in particular Security information and event management, SIEM, is a popular technology to realize security threat and incident detection within Information Technology, IT, systems and Operation Technology, OT, systems. Typically, alarm providing systems/event monitoring systems, in particular SIEM systems, are configured using rules, wherein each rule represents event combinations which emerge if a specific security incident occurs. Such rules are applied to an event stream generated by IT and/or OT systems connected to the SIEM system. If a rule is activated, the security incident covered by the rule occurs and the SIEM system generates an alarm. Alarm providing systems/event monitoring systems, in particular SIEM systems, historically focus on IT systems which establish stable event patterns during normal operation. In these systems attacks often have a specific fingerprint. Therefore, stable rules are able to detect security incidents based on attack signatures as event patterns. As a result, rules are able to spot security incidents. Even for IT systems, the underlying assumptions can be too limited - as attacks try to mimic normal operations. OT event patterns tend to be less stable. Here events represent the more complex operational context. At the same time occurrence of event patterns contains less information, as external factors need to be considered which are only implicitly encoded in events. Reasons for this are variations due to daily operations 1) different operation modes (steady state, startup, maintenance, shut down) 2) operator interventions for efficiency/safety, 3) in some cases multi-purpose plants (e.g., batch plants). Due to these variations the signature of an attack and the daily operation can share similarities. From a pure event perspective as taken by an alarm providing system/event monitoring system, in particular SIEM system, the operator intervention to catch a production issue is hard to separate from the malicious intervention. Therefore, a rule-based incident identification is prone to false alarms such that alarm providing systems/event monitoring systems, in particular SIEM systems, in the IT and OT domain already show a tendency to high number of false alarms.

Hence, there is a need to provide an alarm providing system, in particular SIEM system, with a reduced risk of false alarms.

### SUMMARY OF THE INVENTION

In one aspect of the invention a method for providing an alarm by an alarm providing system is presented, comprising:
receiving plant data from at least one industrial plant by a state providing system;
providing state data indicating at least one state of the at least one industrial plant by the state providing system;
selecting at least one state in the provided state data based on the received plant data by the state providing system;
providing an alarm by the event monitoring system,
wherein the providing of an alarm, comprises:
receiving the selected states in the provided state data and the plant data;
providing at least one rule;
detecting an alarm event in the received plant data based on the provided at least one rule;
providing at least one alarm rule based on the selected states in the provided state data and the provided rules; and
providing the alarm based on the detected alarm event and the provided at least one alarm rule.

The term alarm providing system as used herein is to be understood broadly and represents any device being able to provide an alarm, i.e. an alarm signal and/or alarm sign, by using a state providing system and an event monitoring system.

The term event monitoring system as used herein is to be understood broadly and represents any device being able to monitor events of a system like an industrial plant. For instance, the event monitoring system may be a security information and event management, SIEM, system, but is not limited thereto.

The term plant data as used herein is to be understood broadly and represents any data being provided by an industrial plant or parts thereof. Plant data may include process variables and/or event data, but are not limited thereto. For instance, plant data may be process variables (e.g. temperatures, pressures), event data (e.g. operator actions), data from other plant systems (e.g. embedded devices, control network components), but are not limited thereto. An industrial plant may be any industrial area, domain, factory or parts thereof. The industrial plant can include a control system and/or other systems for controlling the whole industrial area, factory, domain or plant or one or more parts of the whole industrial area, factory, domain or plant.

The term state data as used herein is to be understood broadly and represents any data indicating/including at least one state, i.e. one or a plurality of states, of the at least one industrial plant or parts thereof. States of the at least one industrial plant may be operational states, but are not limited thereto. For instance, operational states may be a normal operator/operation, maintenance, shutdown, degraded operation, but are not limited thereto. The states may be global states, local states or absolute states, but are not limited thereto. The states may be pre-determined, pre-set, pre-provided, event-based provided (e.g. during setup of the event monitoring system, in particular SIEM system) and/or currently provided during run of the industrial plant. Additionally, e.g. when the at least one state indicated in the state data is a local state, the state data may include meta-data being used to specify the area of relevance, e.g. for which subsection of the plant the state is relevant. Exemplary, states may be normal, shut down, service, maintainance, high performance, low performance, etc. of a whole or solely at least one part of the industrial plant, but are not limited thereto.

The phrase selecting at least one state in the provided state data as used herein is to be understood broadly and represents any process for electing, activating or deactivating at least one state included in the provided state data. The selection, activation or deactivation of the at least one state may be provided by using an event/alarm system, using rules, or by using trained machine learning model. For instance, when selecting the at least one state by using the event/alarm system, an alarm signal of the alarm event triggers an abnormal state. For instance, when selecting the at least one state by using the event system, an event of the event, e.g. maintenance of a part of a factory, triggers a maintenance state. For instance, when selecting the at least one state by using rules, wherein the rules are based on combinations of event data, e.g. maintenance, and process variable trajectories, e.g. rotation speed of a machine in the industrial plant. For instance, when selecting the at least one state by using a trained machine learning model, the trained algorithm is configured to identify the different plant states. The state can be restricted to a part of the plant, it not necessarily the whole plant has a state, but a system, or an area of the plant might have different status. Additionally the activation or deactivation may be provided/based on the severity of the state.

The term alarm as used herein is to be understood broadly and represents any notification of a security incident being identified in the event data of an industrial plant and being influenced by the provided at least one alarm rule. For instance, the alarm may be a warning sign, a warning sound, and/or a warning note, but is not limited thereto. The term alarm event as used herein is to be understood broadly and represents any event in the event data of an industrial plant which is or might be with a high probability a security incident. The alarm event may be identified by alarm information by directly or indirectly rules for detection (e.g. in a complex event processing fashion), but is not limited thereto.

The term rule as used herein is to be understood broadly and represents any norm, regulation and/or standard covering a security incident based on the events which are generated by the monitored industrial plant, when the incident occurs. For instance, the rule may be a correlation rule. The rules may be description of patterns over events. The rule may be pre-determined, pre-provided, pre-set, event-based provided or currently provided, but is not limited thereto. Exemplary, whenever a pre-configured rule matches the plant data, an alarm is generated. Rules may be built only on OT events, only on IT events, or on a mixture of both. The rules may be applied, in particular provided, by a rule engine which generates rules of the configured severity once an alarm emerges. The events are considered in the rules of the SIEM system with related severity information. The severity of the rule can be increased or decreased based on external factors, e.g. a rule firing for a less relevant system will have less severity than the same rule firing for a system which is required for normal operation. For instance, a rule may be a firmware update for a controller performed by user role not supposed to do this, during a not working time, a login to the system a number of times with wrong credentials, or a deactivation of core systems of the plant, but is not limited thereto.

The term alarm rule as used herein is to be understood broadly and represents any rule which is influenced/affected by the selected states in the provided state data. The influence/effect of the selected states to the rule can be provided by an integration of the state as a context factor influencing the severity of a rule, or can be handled as part of the rule configuration. The alarm rule may be provided, in particular designed, by cybersecurity experts. In this process, it is possible for the experts to judge the influence of state data, which would allow an integration of the different state effects in the rule, but is not limited thereto.

By including, in particular considering, selected states of the industrial plant in the event monitoring system, the operator intervention can be separated from the malicious intervention, such that the risk of false alarms of the event monitoring system and therefore the alarm providing system can be significantly reduced. In other words, the configuration of the state and state monitoring influence the rule processing of the event monitoring system, such that the occurrence of false alarms can be reduced.

In an embodiment of the method for providing an alarm by an alarm providing system, the providing of the at least one rule is provided by querying at least one rule from at least one database.

The term database as used herein is to be understood broadly and represents any storage unit, memory, cache or cloud storage in which at least one rule is stored, but is not limited thereto. Alternatively or additionally, the database may be a receiving unit for receiving rules from another external device, in particular rule providing unit.

By querying the at least one rule from at least one database, the effectivity of the event monitoring system can be increased, because fewer calculations need to be performed.

In an embodiment of the method for providing an alarm by an alarm providing system, the providing of the state data is provided by querying state data from at least one database.

The term database as used herein is to be understood broadly and represents any storage unit, memory, and cache or cloud storage in which state data are stored, but is not limited thereto. Alternatively or additionally, the database may be a receiving unit for receiving state data from another external device, in particular state providing unit.

By querying the state data from at least one database, the effectivity of the state providing system can be increased, because fewer calculations need to be performed.

In an embodiment of the method for providing an alarm by an alarm providing unit, the providing of state data comprises: detecting alarm events in the received plant data by at least one machine learning unit; and providing the state data based on the alarm events detected by the at least one machine learning unit.

The term machine learning unit as used herein is to be understood broadly and represents any unit including a machine learning algorithm. Alternatively, the machine learning unit may include any artificial intelligence, AI, unit. For instance, the machine learning unit may be a machine learning model, a machine learning anomaly detection model, a classic supervised ML algorithms trained on annotated plant data (e.g. Gradient boosing machine, random forest, Support Vector machine), and advanced supervised ML algorithms in the area of neural networks, e.g. feed forward neural network, recurrent neural network, 1d convolution, an algorithms from the unsupervised domain, classic techniques, e.g. clustering (k-means, LDA), or also here neural network based techniques, e.g. autoencoders, but is not limited thereto. The machine learning unit may be trained and/or trainable by historical process variables and/or event data provided by the industrial plant. The model may be considered in the state configuration, such that the configured states relies on the output if the machine learning model. Alternatively or additionally, the machine learning unit may be applied to the state monitoring, wherein the machine learning unit include any processes for activating or deactivating states.

By using a machine learning unit for providing the alarm events and using this provided alarm events for providing the state data, the accuracy of detection of alarm events in the received plant data can be significantly increased and therefore the precision and/or exactness of the state data can be increased.

In an embodiment of the method for providing an alarm by an alarm providing system, the providing of state data comprises: detecting alarm events in the received plant data by at least one machine learning unit; and providing the state data based on the alarm events detected by the at least one machine learning unit and the queried state data from the at least one database.

By using a machine learning unit for providing the alarm events and using this provided alarm events for providing the state data and by combining or merging the provided state data with the queried state data from the at least one database, the accuracy of detection of alarm events in the received plant data can be significantly increased and the precision and/or exactness of the state data can be increased. The combining or merging of the state data can be provided by a dedicated component with configured heuristics, rules or dedicated machine learning model for state data merging, but is not limited thereto.

In an embodiment of the method for providing an alarm by an alarm providing system, the state data include information about the state entry condition and/or the state exit condition.

The term state entry condition as used herein is to be understood broadly and represents any condition of the entry of the state. In other words, the state entry condition may be the "starting" conditions at which a specific state is fulfilled. The state entry conditions depends on the states respectively each specific state. For instance, when a system is shut down for maintenance, events are generated indicating the shutdown of the system. The system identifies these events and maps them to the state shutdown relevant for the whole plant. For instance, when a piece of equipment trips (e.g. a pump breakdown belonging to a water injection system), the system uses identify the state of "abnormal condition" or "pump trip condition" which is only relevant for the water injection system part of the plant. Other parts of the plant stay in a good state. For instance, when a foaming of a tank occurs, an ML model (other types would work similarly using events or rules) identifies this based on process variable information and activates the state "abnormal process" or (if configured in such detail) "foaming in process" for the related subsection of the plant.

The term state exit condition as used herein is to be understood broadly and represents any condition of the exit, in particular end, of the state. In other words, the state entry condition may be the "stop" conditions at which a specific state is fulfilled. The state entry conditions depends on the states respectively each specific state.

In an embodiment of the method for providing an alarm by an alarm providing system, the at least one state indicated in the state data are at least one global state and/or at least one local state.

The term global state as used herein is to be understood broadly and represents any state which affects every part of the industrial plant. Exemplary, global states may be a shutdown or maintenance activities for the whole plant, but are not limited thereto.

The term local state as used herein is to be understood broadly and represents any state which only affects some sections, i.e. logical sections that fulfill a certain function or physical sectors/areas, of the industrial plant. Exemplary, local states may be maintenance activities on individual components or sections, but are not limited thereto.

By using at least one global state and/or at least one local state a plurality of states in the state data can be activated, because global states and/or local states do not replace each other.

In an embodiment of the method for providing an alarm by an alarm providing system, the method further comprises, when the at least one state includes a plurality of global states and/or local states, priorizing the at least one state by providing a weighting factor to each one of the plurality of global states and/or local states.

The term priorizing of the at least one state as used herein is to be understood broadly and represents any method for weighting states. The prioritizing may be provided by providing a weighting factor to each one of the plurality of global states and/or local states. The weighting factor can be pre-determined, pre-set, pre-provided or currently provided, but is not limited thereto. The state of a broader system overrides the states of its constituent systems, unless otherwise configured. The weighting factor may be based on the hierarchy of the relevance of the state for e.g. the industrial plant. For instance, states which indicate e.g. a plant shutdown (also mentioned as global) would have the highest priority or highest relevance due to their global effect. Other states which e.g. only affects an small part of the industrial plant, i.e. may have not a global effect, may have a lower priority or lower relevance. In this case of the highest relevance, the highest state may overwrite all different states which are in hierarchy below the highest state. Alternatively, the weighting factor may be based on the effects of the states to the system or to subsystems of the plant. The states of a broader system will always overwrite the states of a subsystem, because the states of the broader system has a higher effect on the industrial plant. In this context, these relationships are not necessarily in the hierarchy of system to subsystem. It might also depend on the relationship between parts and processes. In this case, a separate configuration would be required.

By priorizing the at least one state, when a plurality of states are activated, a contradiction of different states can be reliable avoided.

In an embodiment of the method for providing an alarm by an alarm providing system, the at least one state indicated in the state data is an absolute state.

The term absolute state as used herein is to be understood broadly and represents any state which is absolute. Beside an absolute state no other state can be selected/activated such that the system can have only one state. Therefore, if a new state is activated all other states or deactivated.

By using an absolute state, a contradiction of different states can be reliable avoided.

In an embodiment of the method for providing an alarm by an alarm providing system, the method further comprises, when the at least one rule includes a plurality of rules, priorizing the at least one rule by providing a weighting factor to each one of the plurality of rules.

The term priorizing of the at least one rule as used herein is to be understood broadly and represents any method for weighting rules. The prioritizing may be provided by providing a weighting factor to each one of the plurality rules. The weighting factor can be pre-determined, pre-set, pre-provided or currently provided, but is not limited thereto. The weighting factor may be based on the hierarchy of the relevance of the rule for e.g. the industrial plant. For instance, rules which indicate an attack leading to e.g. a plant shutdown would have the highest priority or highest relevance due to its effect. Other rules which e.g. only affects a small part of the industrial plant may have a lower priority or lower relevance. In this case of the highest relevance, the highest rule may overwrite all different rules which are in hierarchy below the highest rule. Alternatively, the weighting factor may be based on the effects of the rules to the system or to subsystems of the plant. The rules of a broader system will always overwrite the rules of a subsystem, because the rules of the broader system has a higher effect on the industrial plant. In this context, these relationships are not necessarily in the hierarchy of system to subsystem. It might also depend on the relationship between parts and processes. In this case, a separate configuration would be required.

By priorizing the at least one rule, when a plurality of rules are provided, a contradiction of different rules can be reliable avoided.

In a further aspect, an alarm providing system for generating an alarm is presented. The alarm providing system comprises a state providing system including a receiving unit for receiving plant data from at least one industrial plant, a state configuration unit for providing state data indicating at least one state of the at least one industrial plant, and a state monitoring unit for selecting at least one state in the provided state data from the state configuration unit based on the received plant data. The alarm providing system further comprises an event monitoring system including a receiving unit for receiving plant data from at least one industrial plant and/or the selected states in the provided state data from the state providing unit, an alarm event detection unit for detecting an alarm event in the received plant data, a rule providing unit for providing at least one rule, a rule configuration unit for providing at least one alarm rule based on the selected at least one state in the provided state data and the provided at least one rule by the rule providing unit, and an alarm providing unit for providing an alarm based on the configured at least one alarm rule from the rule configuration unit and the detected alarm event in the received plant data from the alarm event detection unit.

The term state configuration unit as used herein is to be understood broadly and represents any unit for providing state data indicating at least one state of the at least one industrial plant.

The term state monitoring unit as used herein is to be understood broadly and represents any unit for selecting provided at least one state in the provided state data from the state configuration unit based on the received plant data. In other words, the state monitoring unit derives SIEM-processable state information including a state-configuration based assessment of input information and activation/deactivation of states. State information may be forwarded to the SIEM system or within the SIEM system via event message or other ways of delivering state information to or in the SIEM system, like pub/sub.

By using a state configuration unit and a state monitoring unit, a state-specific rule can be provided to reducing false-alarms of a SIEM and therefore for increasing the relevance of SIEM alarms. In other words, the state configuration unit allows the specification of state information including information about state activation, of state effect and state processing with different ways of handling states.

In an embodiment of the alarm providing system, the rule providing unit comprises at least one database.

In an embodiment of the alarm providing system, the state configuration unit comprises at least one database.

In an embodiment of the alarm providing system, the state configuration unit comprises at least one machine learning unit for detecting alarm events in the received plant data and for providing the state data.

In an embodiment of the alarm providing system, the state configuration unit comprises a priorization unit for priorizating the at least one state.

Any disclosure and embodiments described herein relate to the method and the system, lined out above and vice versa. Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "Initiating or causing to perform an action" includes any processing signal that triggers a computing device to perform the respective action.

### BRIEF DESCRIPTION OF THE DRAWINGS

In the following, the present disclosure is further described with reference to the enclosed figures:
- Fig. 1: illustrates a flow diagram of a method for providing an alarm by an alarm providing system;
- Fig. 2: illustrates an example embodiment of an alarm providing system;
- Fig. 3: illustrates a further example embodiment of an alarm providing system.

### DETAILED DESCRIPTION OF EMBODIMENT

The following embodiments are mere examples for the method and the system disclosed herein and shall not be considered limiting.

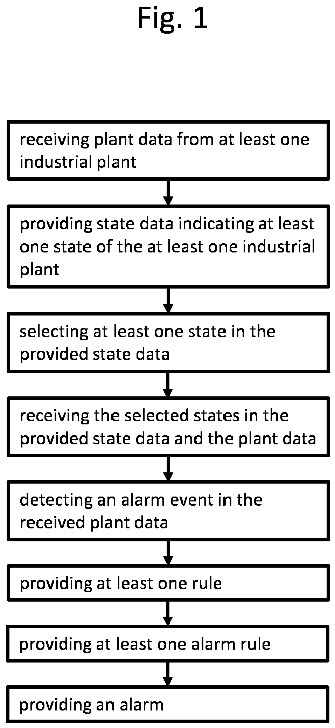

Fig. 1 illustrates a flow diagram of a method for providing an alarm by an alarm providing system. In a first step, plant data from at least one industrial plant are received by a state providing system. In a second step state data indicating at least one state of the at least one industrial plant are provided by the state providing system. In a third step, at least one state in the provided state data based on the received plant data is selected by the state providing system. In a fifth step, an alarm is provided by an event providing system.

The alarm is provided by the following sub steps. In a first sub step, the selected states in the provided state data and the plant data are received. In a second sub step, an alarm event in the received plant data is detected. In a third sub step, at least one rule is provided. In a fourth sub step, at least one alarm rule based on the selected states in the provided state data and the provided rules is provided. In a fifth sub step, the alarm based on the detected alarm event and the provided at least one alarm rule is provided.

Optionally, the method further comprises the step of, when the at least one state includes a plurality of global states and/or local states, priorizing the at least one state by providing a weighting factor to each one of the plurality of global states and/or local states.

Optionally, the method further comprises the step of, when the at least one rule includes a plurality of rules, priorizing the at least one rule by providing a weighting factor to each one of the plurality of rules.

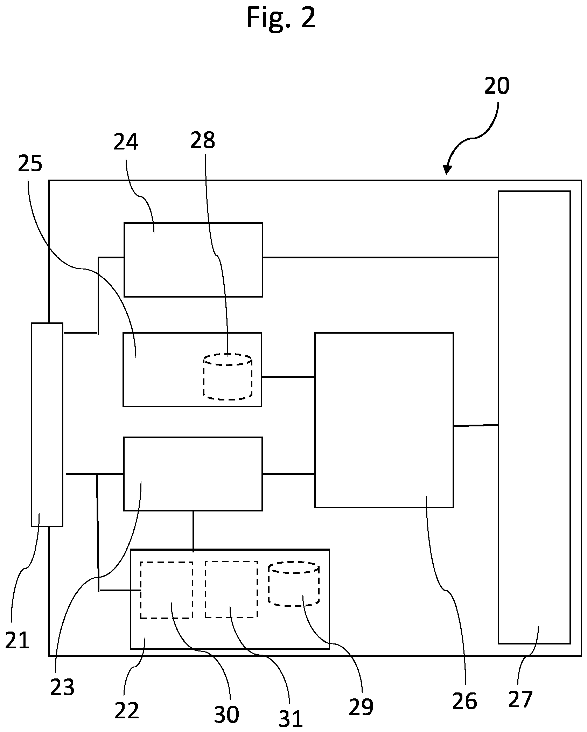

Fig. 2 illustrates an example embodiment of an alarm providing system. The alarm providing system 20 comprises a state providing system and an event monitoring system. The state providing system and/or the event monitoring system comprises a receiving unit 21 for receiving plant data from at least one industrial plant. The receiving unit 21 is communicatively coupled to the industrial plant, in particular a digital plant representation of the industrial plant. The state providing system comprises a state configuration unit 22 for providing state data indicating at least one state of the at least one industrial plant and a state monitoring unit 23 for selecting at least one state in the provided state data from the state configuration unit 22 based on the received plant data. The state configuration unit 22 is communicatively coupled to the state monitoring unit 23. The state monitoring unit 23 is communicatively coupled to the receiving unit 21. The event monitoring system comprises an alarm event detection unit 24 for detecting an alarm event in the received plant data. The alarm event detection unit 24 is communicatively coupled to receiving unit 21. Furthermore, the event monitoring system comprises a rule providing unit 25 for providing at least one rule. Further, the event monitoring system comprises a rule configuration unit 26 for providing at least one alarm rule based on the selected at least one state in the provided state data and the provided at least one rule by the rule providing unit 25. The rule configuration unit 26 is communicatively coupled to the rule providing unit 25 and to the state monitoring unit 23. The event monitoring system further comprises an alarm providing unit 27 for providing an alarm based on the configured at least one alarm rule from the rule configuration unit 26 and the detected alarm event in the received plant data from the alarm event detection unit 24. The alarm providing unit 27 is communicatively coupled to the alarm detection unit 24 and the rule configuration unit 26. All communicatively coupling can be provided wireless and/or by wire. In this embodiment of the invention, the state monitoring unit 23 and the state configuration unit 22 are arranged within the alarm providing system 20.

Optionally, the rule providing unit 25 comprises at least one database 28 in which at least one rule is sorted. The database 28 is included in the rule providing unit 25. Alternatively, the database 28 can be arranged outside of the rule providing unit 25 and/or outside of the event monitoring system, but is communicatively coupled by wire or wireless to the rule providing unit 25.

Optionally, the state configuration unit 22 comprises at least one database 29 in which state data are stored. The database 29 is included in the state configuration unit 22. Alternatively, the database 29 can be arranged outside of the state configuration unit 22 and/or outside of the state providing system, but is communicatively coupled by wire or wireless to the state configuration unit 22.

Optionally, the state configuration unit 22 comprises at least one machine learning unit 30 for detecting alarm events in the received plant data and for providing the state data. The machine learning unit 30 is communicatively coupled to the receiving unit 21. Alternatively, the machine learning unit 30 can be arranged outside of the state configuration unit 22 and/or outside of the state providing system, but is communicatively coupled by wire or wireless to the state configuration unit 22.

Optionally, the state configuration unit 22 comprises a priorization unit 31 for priorizating the at least one state. The priorization unit 31 is included in the state configuration unit 22. Alternatively, the priorization unit 31 can be arranged outside of the state configuration unit 22 and/or outside of the state providing system, but is communicatively coupled by wire or wireless to the state configuration unit 22.

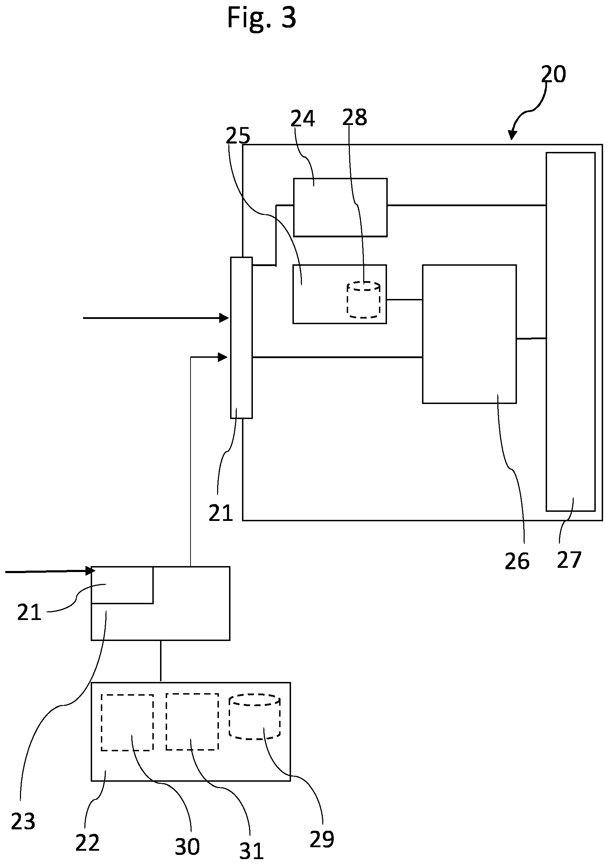

Fig. 3 illustrates a further example embodiment of an alarm providing system. The alarm providing system of Figure 3 includes all elements of the alarm providing system of Figure 2. The alarm providing system of Figure 3 differs to the alarm providing system of Figure 2 in that the state monitoring unit 23 is arranged outside of the event monitoring system, but is communicatively coupled by wire or wireless to the event monitoring system. Additionally, the state configuration unit 22 is also arranged outside of the event monitoring system, but is communicatively coupled by wire or wireless to the state monitoring unit 23 and the data providing unit 21. The data providing unit 21 receives plant data from at least one industrial plant (depicted by the arrow).

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different nodes using different equipment/data processing units.

In the claims as well as in the description the word "comprising" does not exclude other elements or steps and the indefinite article "a" or "a" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method for providing an alarm by an alarm providing system,
comprising:
receiving plant data from at least one industrial plant by a state providing system;
providing state data indicating at least one state of the at least one industrial plant by the state providing system;
selecting at least one state in the provided state data based on the received plant data by the state providing system;
providing an alarm by the event monitoring system,
wherein the providing of an alarm, comprises:
receiving the selected states in the provided state data and the plant data;
providing at least one rule;
detecting an alarm event in the received plant data based on the provided at least one rule
providing at least one alarm rule based on the selected states in the provided state data and the provided rules; and
providing the alarm based on the detected alarm event and the provided at least one alarm rule.

2. The method according to claim 1,
wherein the providing of the at least one rule is provided by querying at least one rule from at least one database.

3. The method according to any one of the preceding claims,
wherein the providing of the state data is provided by querying state data from at least one database.

4. The method according to claims 1 or 2,
wherein the providing of state data comprises:
detecting alarm events in the received plant data by at least one machine learning unit; and
providing the state data based on the alarm events detected by the at least one machine learning unit.

5. The method according to claims 1 to 3,
wherein the providing of state data comprises:
detecting alarm events in the received plant data by at least one machine learning unit; and
providing the state data based on the alarm events detected by the at least one machine learning unit and the queried state data from the at least one database.

6. The method according to any one of the preceding claims,
wherein the state data include information about the state entry condition and/or the state exit condition.

7. The method according to any one of the preceding claims,
wherein the at least one state indicated in the state data are at least one global state and/or at least one local state.

8. The method according to claim 7, further comprising:
when the at least one state includes a plurality of global states and/or local states,
priorizing the at least one state by providing a weighting factor to each one of the plurality of global states and/or local states.

9. The method according to claims 1 to 6,
wherein the at least one state indicated in the state data is an absolute state.

10. The method according to any one of the preceding claims, further comprising:
when the at least one rule includes a plurality of rules,
priorizing the at least one rule by providing a weighting factor to each one of the plurality of rules.

11. An alarm providing system (20) for generating an alarm, comprising:
a state providing system including:
a receiving unit (21) for receiving plant data from at least one industrial plant;
a state configuration unit (22) for providing state data indicating at least one state of the at least one industrial plant; and
a state monitoring unit (23) for selecting at least one state in the provided state data from the state configuration unit (22) based on the received plant data; and
an event monitoring system including:
a receiving unit (21) for receiving plant data from at least one industrial plant and/or the selected states in the provided state data from the state providing unit;
an alarm event detection unit (24) for detecting an alarm event in the received plant data;
a rule providing unit (25) for providing at least one rule;
a rule configuration unit (26) for providing at least one alarm rule based on the selected at least one state in the provided state data and the provided at least one rule by the rule providing unit (25); and
an alarm providing unit (27) for providing an alarm based on the configured at least one alarm rule from the rule configuration unit (26) and the detected alarm event in the received plant data from the alarm event detection unit (24).

12. The alarm providing system (20) according to claim 11,
wherein the rule providing unit (25) comprises at least one database (28).

13. The alarm providing system (20) according to claims 11 or 12,
wherein the state configuration unit (22) comprises at least one database (29).

14. The alarm providing system (20) according to claims 11 to 13,
wherein the state configuration unit (22) comprises at least one machine learning unit (30) for detecting alarm events in the received plant data and for providing the state data.

15. The alarm providing system (20) according to one of the claims 11 to 14, wherein the state configuration unit (22) comprises a priorization unit (31) for priorizating the at least one state.
